# EUROPEAN PATENT SPECIFICATION

(11) **EP 2 204 727 B1**
(45) Date of publication and mention of the grant of the patent: **31.10.2018**
(21) Application number: 08022551.9
(22) Date of filing: 31.12.2008
(51) Int. Cl.: G06F 3/0489, G06F 17/30

(54) **Apparatus and method for providing access to communication items**
Vorrichtung und Verfahren zur Bereitstellung des Zugriffs auf Kommunikationselemente
Procédé et appareil pour accéder à des éléments de communication

(43) Date of publication of application: 07.07.2010
(73) Proprietor: Vodafone Holding GmbH, 40213 Düsseldorf (DE)
(72) Inventor: German, Leon, D-40219 Düsseldorf (DE); Leinss, Mirja, D-40545 Düsseldorf (DE)
(74) Representative: Jostarndt Patentanwalts-AG

(56) References cited:
- EP-A- 1 251 438
- EP-A- 1 762 968
- EP-A2- 1 679 879
- WO-A-2005/043373
- US-A1- 2005 091 596
- David Pogue ET AL: "iPhoto 6: The Missing Manual" In: "iPhoto 6: The Missing Manual", 28 March 2006 (2006-03-28), O'Reilly Media, Inc., XP055182018, ISBN: 978-0-59-652725-9

## Description

### Technical field

The present invention relates to a method for providing access to data items by means of a mobile communication device provided with a screen. In particular the invention is related to a method according to claim 1. The invention is also related to an apparatus for providing access to data items.

### Background of the invention

Today there is an increasing number of digital communication devices such as personal digital assistants (PDA), portable computers, mobile telephones, palmtop computers, etc. Sometimes these devices are also equipped with cameras for taking pictures, as well as video and audio recordings. The features and capabilities of the devices lead to an increasing number of data files that maybe exchanged between different devices and users by wireless or wired networks. As an example, a mobile telephone is no longer limited for receiving and making voice calls but it may take photographs, receive e-mails and SMS messages and voice messages. The variety of different kinds of communication increases the number of communication items significantly. The number of communication items is increased even further because one and the same communication item of the above mentioned types is frequently copied to a plurality of recipients. Because of the sheer quantity it becomes consequently more and more difficult for individuals to organize their communication items on a mobile communication device especially if the communication device has only a small screen.

There are different approaches to help the user in managing a large plurality of communication items. The approaches include providing the user with different views of the communication items such as a list view or a time line view. The list view contains simply a list of all received communication items. The list is sorted according to a property of the communication items. The property according to which the list is sorted may be selected by the user by applying filter functions to the entirety of the communication items stored on the mobile communication device. The time line view puts icons associated with each communication item on a time line according to the receiving time of the communication item regardless of their properties. The purpose of the different views is to help the user to find a particular communication item by presenting the communication items in different ways.

It is known to set up different kinds of directories in which the communication items are listed in a sequential order according to different sorting criteria such as the name of the sender, receiving time, send time, subject and the like. However, conventional sorting mechanisms still do not solve completely the issue of finding a particular communication item among a big quantity of communication items and the presentation of a large number of communication items remains difficult to organize in this way.

From US 2005/010864381 a topographic presentation of media files in a media diary application is known. The suggested topographic presentation is essentially realized on the calendar in which different kinds of communication items are graphically indicated allowing a user to preselect the kind of communication item he is looking for. US 2005/0105374A1 describes a media diary application which is implemented in a digital communication device. The media diary provides for a calendar view of calendared events and reminders and a media view of media items associated with a past calendared event or date. The known media diary also provides for a time line view that combines both the calendar view and media view into a composite view that incorporates a time line.

US 2005/0091596 A1 discloses a three-dimensional view of a data collection based on an attribute. A timeline is provided for displaying files and folders. The timeline may include a focal group that displays detailed information about ist content to the user.

Remaining items on the timeline are displayed in less detail and may be positioned to appear further away from the user. A histogram may be provided as part of the view to allow the user to more easily navigate the timeline to find a desired file or folder.

WO 2005/043373 A1 discloses a method and system for organizing content on a spiral time axis, e.g. based on the creation data or reception time of the corresponding content. More recent content can be positioned towards the outside of the spiral while older content is positioned towards the inside of the spiral. Properties of the content representation can optionally be specified to convey additional information about the content.

EP 1762968 A1 discloses a mobile communication terminal including a memory unit configured to store at least one call related event, a display configured to display a time line, and a controller configured to display the at least one call related event on the time line based on a time information of at least one call related event. The time line may be displayed a different appearances, e.g. in a circular-shaped time line.

EP 1251438 A2 discloses an information retrieval system wherein design and content are separated. Within a section of a title, a designer can layout pages with controls that define areas for content to be inserted into pages.

Many attempts were made to help the users to organize communication items in a more efficient way or just to provide an alternative, which is convenient for some users and their purposes.

The object of the present invention is to suggest a new way of presenting communication items or more generally speaking data items on a portable device having a display screen.

### Brief description of the invention

The present invention proposes a concept for improving the presentation of communication items on a mobile communication device.

The invention is set out in the appended set of claims.

Further features and advantages of the invention will become apparent when reading the detailed description appended with drawings.

### Short description of the drawing

In the drawing exemplary embodiments of the invention are illustrated. It shows:
- Figure 1: a top view of the mobile communication device according to the invention;
- Figure 2: a schematic block diagram of the communication device;
- Figure 3: is a schematic screen view of the mobile communication device of figure 1 in a time line viewing mode;
- Figures 4a is to 4c: screen views illustrating one kind of the jump functionality of the mobile communication device;
- Figures 5a is to 5d: screen views displaying another kind of the jump functionality of the mobile communication device;
- Figures 6a is to 6d: screen views illustrating yet another kind of the jump functionality of the mobile communication device;
- Figures 7a is to 7c: screen views visualising a naming function of the mobile communication device; and
- Figures 8a is to 8c: screen views visualising another naming function of the mobile communication device.

Similar or identical features and elements are labeled with the same reference numbers in the drawing.

### Detailed description

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the scope of the invention as defined by the following appended claims. One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

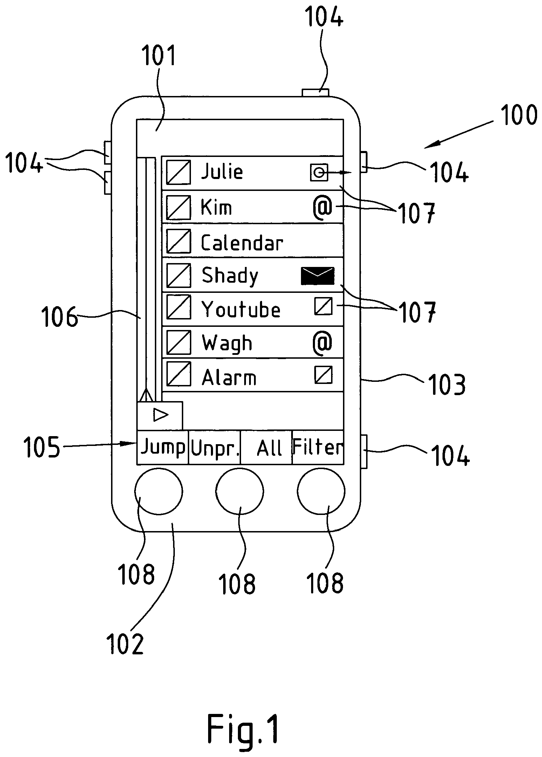

Figure 1 shows a mobile communication device 100 according to the present invention such as a mobile phone, a PDA (personal digital assistant) or the like, which is connected to a wireless public land mobile network (PLMN). The PLMN is a wireless telecommunication network according to GSM standard or according to the UMTS standard for example. The user of the communication device 100 can set up a connection to other communication devices through the network.

For the sake of the simplicity the present invention will be described in the following with reference to a PDA having a screen 101 covering a major part of the top surface 102 of the housing 103 of the mobile communication device. However, the present invention shall not be limited to PDAs.

On the periphery of the housing 103 there are buttons 104 provided enabling a user to control functionalities of the communication device 100. In addition to that, there are four soft keys forming a command bar 105 and a scrollbar 106 available for the user for further control functionalities. In figure 1 only two of the four soft keys are labelled. One soft key is labelled "filter" to activate filter functions allowing to control what kind of items are a displayed on the screen 101. In a submenu the device 100 presents several kinds of filters to the user being is connected to display e.g. only e-mails, only messages of a specific sender, etc. The neighbouring soft key labelled "All" the reverses the filter function and initiates that all items are displayed again. A special and sometimes very useful filter function is executed by activating the soft key 105 labelled "Unprocessed". This filter effects that only still unprocessed communication items appear on the screen 101. Finally, there is a soft key labelled "Jump" calling up a function which is explained further below.

In its main portion the screen 101 displays communication items 107 received by the communication device. Each communication item 107 displays a short name of the sender as well as an icon symbolizing the type of communication, e.g. e-mail, SMS etc. Finally, there are three hard keys 108 provided in the lower part of the top surface 102 of the housing 103.

The term "communication item" shall have a broad meaning in relation to the present invention. On the one hand it includes e-mail, voice, and SMS messages and the like but also contacts with other people and web sites of service providers. On the other hand also media files like pieces of music, video clips or pictures shall be comprised by the meaning of communication item. However, technically speaking a contact or a communication item is just a data item.

Each communication item has properties which can be used to search for a specific communication item or to group a plurality of communication items. The entirety of the communication items stored in the mobile communication device 100 is also referred to as "life drive" because it reflects all kinds of communication items of the user.

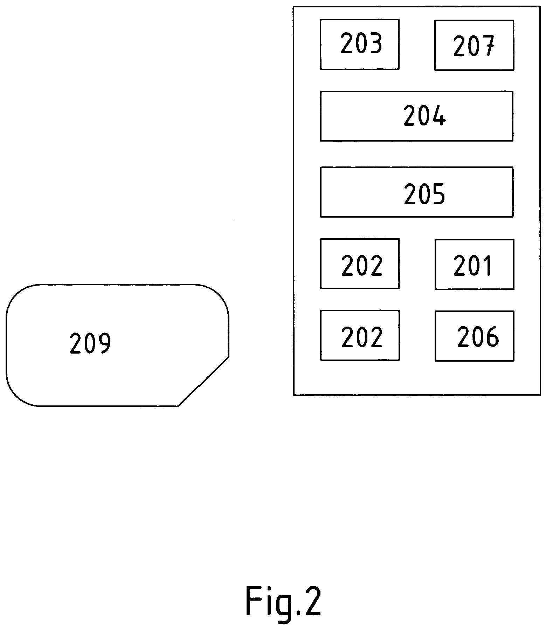

Figure 2 shows a schematic block diagram of the mobile communication device 100. The mobile communication device 100 comprises a mobile terminal 200 including a main processor 201 for controlling the operation of the mobile terminal 200. A memory 202 is coupled to the main processor 201 for storing data and applications that can be run on the main processor 201. Furthermore, the mobile terminal 200 comprises one or more communication interfaces. Particularly, the mobile terminal 200 provides a radio interface 203 for connecting the mobile terminal 200 wirelessly to a mobile communication network such as the PLMN mentioned above.

For capturing acoustic signals, particularly for capturing speech from the user of the mobile terminal 200, the mobile terminal 200 comprises a microphone 206. For outputting acoustic signals, the mobile terminal 200 comprises a loudspeaker 207. Moreover, the mobile terminal 200 comprises a liquid crystal display (LCD) 204 forming a screen. An input unit 205 interfaces the buttons 104, the command bar 105 and the hard keys 108.

By means of a card reader unit 208, the mobile terminal 200 can be connected to a subscriber identity module (SIM card) 209 to form the mobile communication device 100. The subscriber identity module 209 is a so-called smart card, which can be inserted into a card receptacle of the mobile terminal 200 that holds the card in a position, in which its contact elements are connected to corresponding contact elements of the card reader unit 208 of the mobile terminal 200. The card receptacle and the card reader unit 208 are usually arranged within a battery compartment of the mobile terminal 200, which is accessible by the mobile user.

The subscriber identity module 209 may be configured as a subscriber identity module (SIM) according to the GSM standard or as a universal subscriber identity module (USIM) according to the UMTS standard, for example.

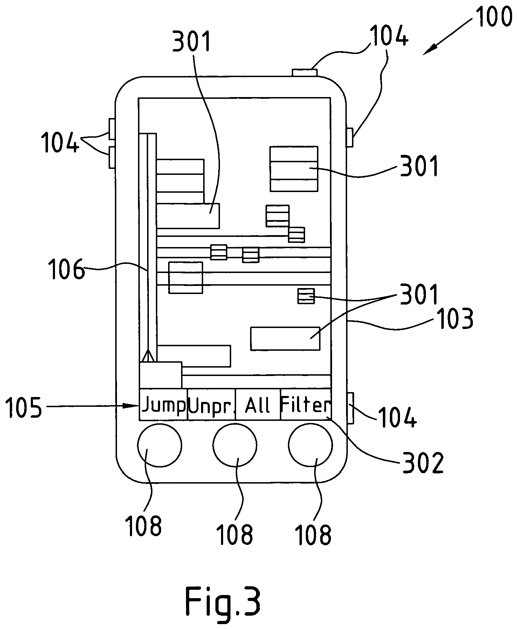

Figure 3 shows a top view of the mobile communication device 100. Incoming communication items are displayed on the screen 101 as icons 301 which are a symbolised in a simplified manner in figure 3. The icons 301 vary in shape and size as a function of the type of communication item to facilitate for the user to distinguish different types of communication items. The icons 301 are presented in a quasi-three-dimensional viewing mode in which the icons 301 associated with more recently received communication items are replaced in the foreground of the screen 101 corresponding to the lower part of the screen 101. The icons 301 associated with older communication items are placed such that they seem to be further away in the background of the presentation shown in figure 3. By scrolling up and down the scrollbar 106 the user may travel along a timeline, i.e. the user may bring past communication items to the foreground of the screen 101. This functionality helps him already a lot to navigate through the communication items. However, if very many communication items are stored in the life drive of the mobile communication device 100 then even a relatively comfortable navigation along a timeline is not completely satisfactory. Therefore, the mobile communication device 100 provides for a jump function in the command bar 105 enabling the user to jump to a selectable position on the timeline avoiding that the user has to is scroll along extended periods of time.

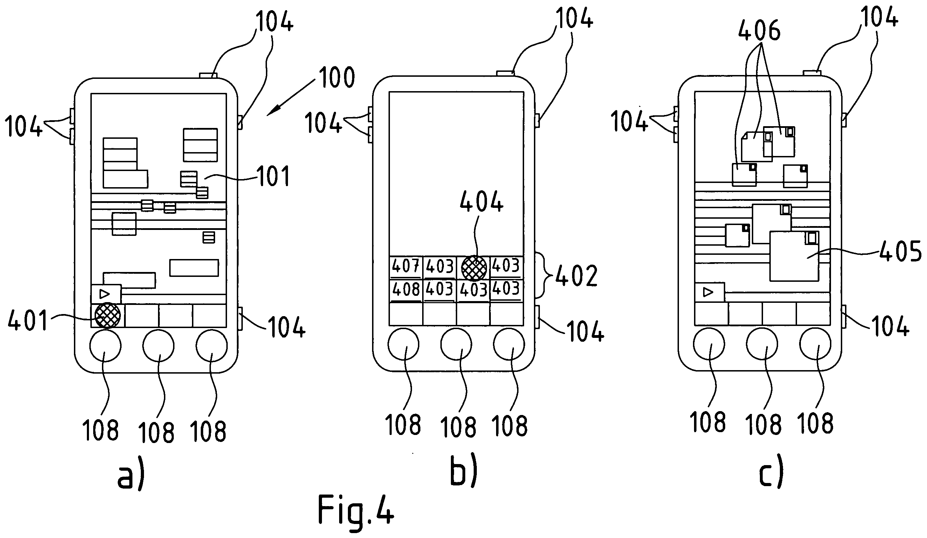

In the figure 4a to 4c one development of the jump function is illustrated. Figure 4a is a simplified illustration of the timeline view already shown in figure 3. The user calls up the jump function by activating the soft key 105 which is labelled with "Jump" in figure 3. The user activates the soft key 105 with his finger or a pointing device. The activation of the soft key 105 is symbolised by the circular hatched area 401.

The activation of the jump soft key calls up a quick menu 402 shown in figure 4b. The quick menu 402 contains eight soft keys. Six soft keys 403 are associated with the fixed period of time such as "one month ago", "one week ago", etc. In the example shown in figure 4b the user activates the soft key associated with "one month ago". The activation is symbolised by the circular hatched area 404. In consequence, the mobile communication device 100 displays on the screen 101 a timeline view putting into the foreground an icon 405 associated with the communication item that has been received one month ago as it is shown in figure 4c. The icons 406 shown further in the background of the timeline view of figure 4c are related to the communication items that have been received even further in the past.

Again with reference to figure 4b one soft key 407 is related to "The beginning" and puts the very beginning of the timeline into the foreground of the timeline view that appears in response of the activation of the soft key 407. Finally, the quick menu 402 contains a soft key 408 which is related to an edit mode of the jump functionality as it will be described in the following.

Though the jump functionality or function is described in connection with a timeline view to illustrate the invention, the jump function is not limited to this particular type of view. E.g. the jump function can also be applied to a list view.

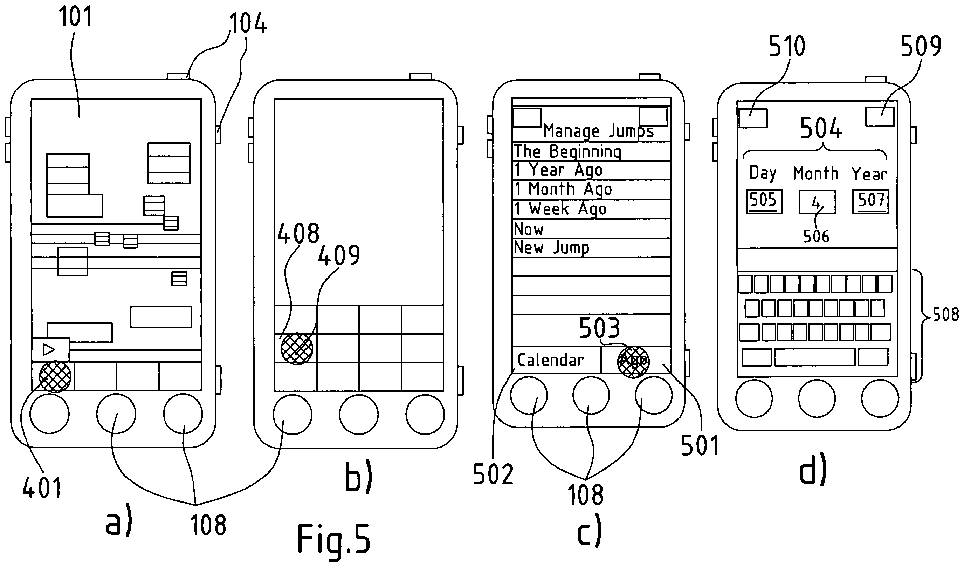

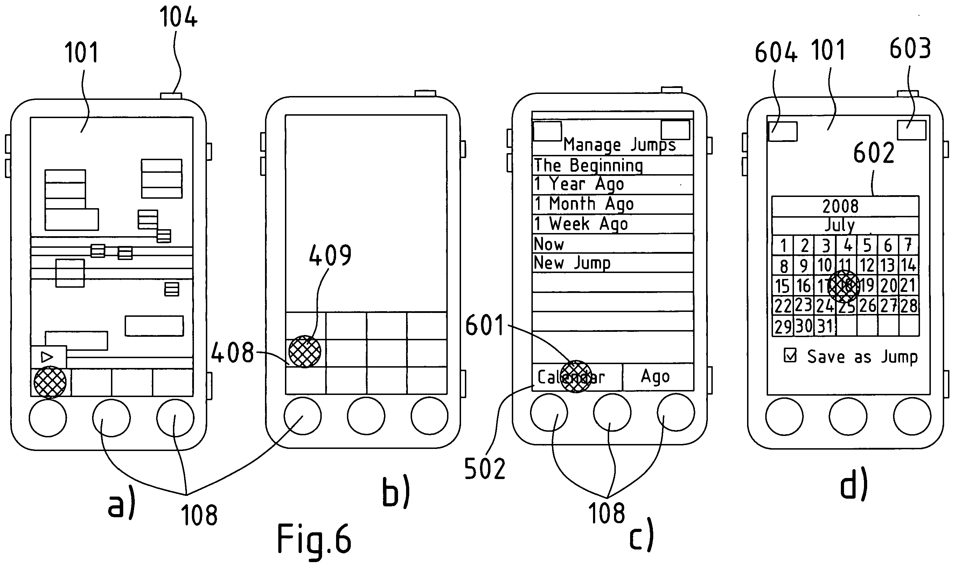

The edit mode within the jump functionality is described in more detail with reference to figures 5 and 6.

Figure 5a corresponds to figure 4a illustrating the situation in which the user calls up the jump function by activating the corresponding soft key. The activation of the soft key is symbolised by the circular hatched area 401 on top of the soft key. The activation of the jump soft key calls up the quick menu 402 shown in figure 5b. The user activates the soft key 408 which is associated with the edit mode. The activation of the soft key 408 is symbolised by the circular hatched area 409. In the next step shown in figure 5c a list of already existing jump functions appears on the screen having an additional jump function at the end of the list which is named "new jump". On the bottom of the screen 101 below the list of the jump functions two new soft keys 501 and 502 appear. The soft key 501 is labelled "Ago" and the soft key 502 is labelled "Calendar". In the situation shown in figure 5c the user activates and the soft key 501 which it is symbolised by the hatched circular area 503 on top of soft key 501. In a response to the activation of soft key 501 the input mask 504 is in displayed on the screen 101. The input mask contains three input fields 505, 506, and to 507 for a numerical number of days, months or years. Below the input mask 504 a touch pad 508 is displayed enabling the user to still in the input fields of the input mask 504. In this situation illustrated in figure 5d the user has selected the input field 506 with a numerical value of "4". If the user activates an okay button 509 the the mobile communication device switches to a timeline view putting items corresponding to communication items into the foreground which have been received four months ago. By inputting different numerical values into the input fields 505, 506, and 507 any desired timeline view can be created by the user in a convenient way. In case the user has made a mistake when filling out the input fields 505, 506, and 507 then he may activate a cancel button 510 which is located in the upper left corner of the screen 101 to cancel his input and to restart with blank input fields.

However, it may happen that the user prefers to go directly back to a certain day in the past. For this purpose the jump function as it is described in figures 5a to 5d is not the most suitable approach.

In order to offer the user in a comfortable way to build a timeline view starting from a calendar date the present invention offers another jump function, which is illustrated in connection with figures 6a to 6d. Figures 6a and 6b correspond to figures 5a and 5b. Consequently, for the sake of conciseness the description of these figures does not need to be repeated. In figure 6c the user activates the soft key 502 which is symbolised by the circular hatched area 601. In response to the activation of soft key 502 a calendar 602 is in displayed on the screen 101. The user may now see that in a comfortable way a specific date from the calendar 602 as a reference point for the desired timeline view. In this situation illustrated in figure 6d the user activates the 18th of July 2008. If the user activates an okay button 603 the mobile communication device switches to a timeline view putting communication items related to this date into the foreground on the screen. Obviously, this can be done with any other date including other months and other years. In case the user has made a mistake when selecting a date then he may activate a cancel button 604 located in the upper left corner of the screen 101 to cancel his input and to restart with a blank calendar.

Insofar the jump function has been described until here the user has to input in the jump function each time anew. However, the user may wish to store in the jump function he has defined once because he wants to reuse it several times. In order to address this need the present invention also provides for the possibility to store a user-defined jump function will be explained in the following.

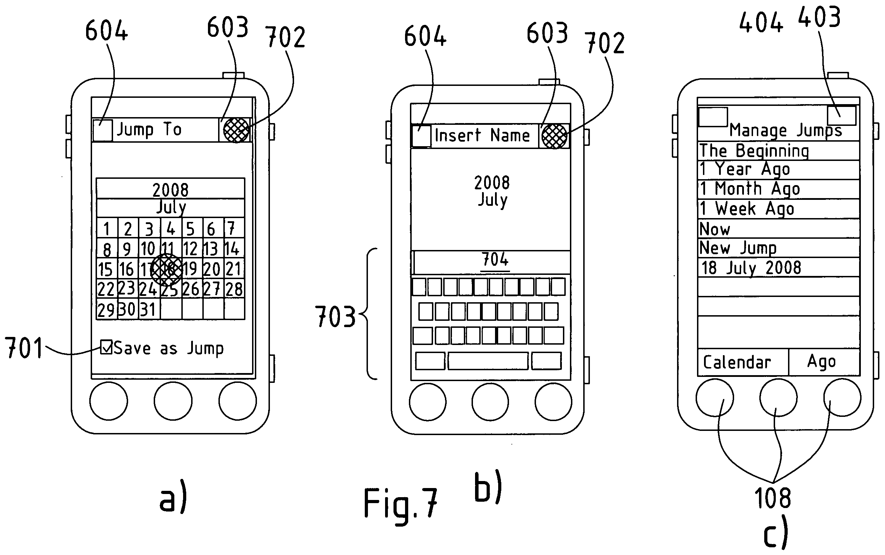

Figure 7a shows again the calendar of figure at the 6a. The user checks an input field 701 to indicate his wish to save the defined jump function. Upon the activation of the okay button 603 a new screen is a displayed as it is shown in figure 7b. The activation is symbolised by a circular hatched area 702. The new screen is now labelled as "Insert Name" and provides for a touchpad 703 enabling a user to input the name into an input field 704. In the present situation the user has selected the name "18 July 2008". If the user activates the okay button 603 again then the jump function appears with its name on the list together with other available jump functions as it is shown in figure 7c.

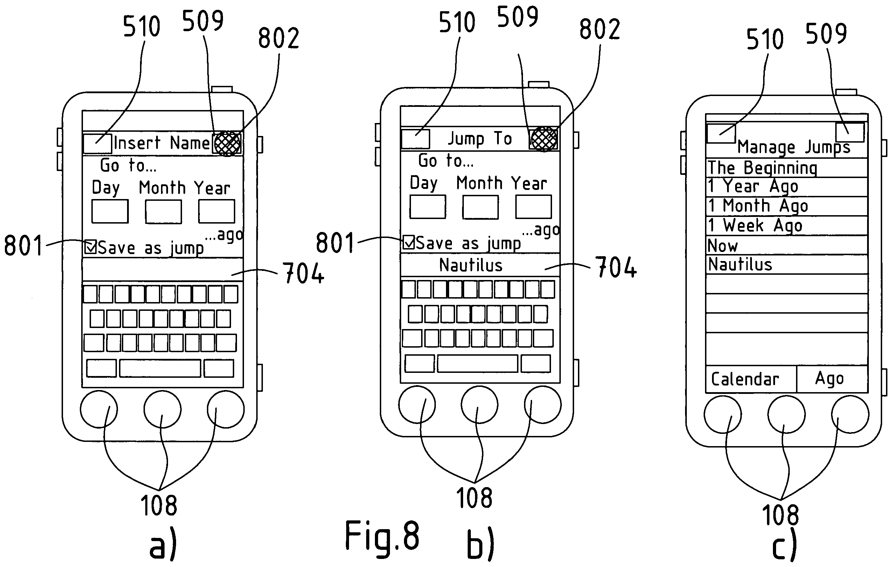

In figures 8a to 8c a similar approach is illustrated for a jump functions which are related to any predefined period of time as it has been described in connection with figures 5a to 5d. The user checks an input field 801 to indicate his wish to save the defined jump function. Upon the activation of the okay button 509 a new screen is a displayed as it is shown in figure 8b. The activation is symbolised by a circular hatched area 802. The new screen is now labelled as "Insert Name" and provides for a touchpad 703 enabling a user to input the name into the input field 704. In the present situation of the user has selected the name "Nautilus". If the user activates the okay button 509 again then the jump function appears on with it its name on the list also be available jump functions as it is shown in figure 8c.

### List of reference numerals

- 100: communication device
- 101: screen
- 102: top surface
- 103: housing
- 104: buttons
- 105: command bar
- 106: scroll bar
- 107: communication items
- 108: hard key
- 200: mobile terminal
- 201: main processor
- 202: memory
- 203: radio interface
- 204: LCD display
- 205: input unit
- 206: microphone
- 207: loud speaker
- 208: card reader
- 209: SIM card
- 301: icon
- 302: filter button
- 401: hatched area
- 402: quick menu
- 403: soft key
- 404: hatched area
- 405: icon
- 406: icon
- 501: soft key
- 502: soft key
- 503: hatched area
- 504: input mask
- 505-507: input fields
- 508: touch pad
- 509: okay button
- 510: cancel button
- 601: hatched area
- 602: calendar
- 603: okay button
- 604: cancel button
- 701: check box
- 702: hatched area
- 703: touch pad
- 704: input field
- 801: check box
- 802: hatched area

## Claims

1. Method for providing information by graphics that constitute a man machine interface for a mobile communication device (100) equipped with a screen (101), the mobile communication device (100) being connectable to other communication devices through a wireless telecommunication network, wherein the method comprises the following steps:
- receiving a plurality of data items;
- generating one graphical element (405, 406) for each data item;
- associating the graphical element (405, 406) to the corresponding data item;
- arranging the data items according to their receiving time in a list;
- displaying first graphical elements (406) on the screen (101) which are associated with data items received during a first period of time; and
- displaying second graphical elements (405) on the screen (101) which are associated with data items received during a second period of time, the first period of time being further in the past than the second period of time, such that the second graphical elements (405) are shown in the foreground and the first graphical elements (406) are shown in the background;
- providing a jump soft key (105) enabling a jump function, the jump function enabling the user to select the second period of time and to jump to the selected second period of time, wherein the jump function calls up a quick menu (402) providing soft keys (403) associated with fixed periods of time and a soft key (408) related to an edit mode, the edit mode enabling generation of a soft key associated with a new second period of time, the edit mode providing an input mask or a calendar as an input means enabling a user to input the new second period of time and the edit mode allowing the user to jump to the new second period of time.

2. Method according to claim 1, wherein the method further comprises the step of storing the second period of time.

3. Method according to claim 2, wherein the method further comprises the step of displaying the second period of time in a list.

4. Method according to claim 3, wherein the method further comprises the step of renaming the second period of time.

5. Method according to claim 1, wherein after activation of the edit mode list of already existing jump functions appears on the screen (101) having an additional jump function at the end of the list named new jump.

6. Method according to claim 5, wherein two soft keys (501, 502) appear on the bottom of the screen (101) below the list of the jump functions, where in response to the activation of one of the soft keys (501) the input mask (504) is displayed on the screen (101) and in response of the other soft key (502) the calendar (602) is displayed on the screen (101).

7. Mobile communication device (100) equipped with a screen (101), the mobile communication device (100) being connectable to other communication devices through a wireless telecommunication network, the mobile communication device (100) being further arranged to execute a method according to any of claims 1 to 6.

## Patentansprüche

1. Verfahren zur Bereitstellung von Informationen durch Grafiken, die eine Mensch-Maschine-Schnittstelle für eine Mobilkommunikationsvorrichtung (100) darstellen, die mit einem Bildschirm (101), ausgerüstet ist, wobei die Mobilkommunikationsvorrichtung (100) mit anderen Kommunikationsvorrichtungen durch ein Drahtlostelekommunikationsnetz verbindbar ist, wobei das Verfahren die folgenden Schritte umfasst:
- Empfangen einer Vielzahl von Datenelementen;
- Erzeugen eines Grafikelements (405, 406) für jedes Datenelement;
- Zuordnen des Grafikelements (405, 406) dem entsprechenden Datenelement;
- Anordnen der Datenelemente entsprechend ihrer Empfangszeit in einer Liste;
- Anzeigen der ersten grafischen Elemente (406) auf dem Bildschirm (101), die Datenelementen zugeordnet sind, die während eines ersten Zeitraums empfangen werden; und
- Anzeigen der zweiten grafischen Elemente (406) auf dem Bildschirm (101), die Datenelementen zugeordnet sind, die während eines zweiten Zeitraums empfangen werden, wobei der erste Zeitraum weiter in der Vergangenheit liegt als der zweite Zeitraum, so dass die zweiten Grafikelemente (405) im Vordergrund angezeigt werden und die ersten Grafikelemente (406) im Hintergrund angezeigt werden;
- Bereitstellen eines Sprung-Softkeys(105), der eine Sprungfunktion ermöglicht, wobei die Sprungfunktion es dem Nutzer ermöglicht, den zweiten Zeitraum auszuwählen und zum zweiten ausgewählten Zeitraum zu springen,
wobei die Sprungfunktion ein Schnellmenü (402) aufruft, das Softkeys (403), die festen Zeiträumen zugeordnet sind, und einen Softkey (408) für den Bearbeitungsmodus bereitstellt, wobei der Bearbeitungsmodus die Erzeugung eines Softkeys ermöglicht, der einem neuen zweiten Zeitraum zugeordnet ist, wobei der Bearbeitungsmodus eine Eingabemaske oder einen Kalender als Eingabemittel bereitstellt, das es einem Nutzer ermöglicht, den neuen zweiten Zeitraum einzugeben und der Bearbeitungsmodus es dem Nutzer ermöglicht, zu dem neuen zweiten Zeitraum zu springen.

2. Verfahren nach Anspruch 1, wobei das Verfahren ferner den Schritt des Speicherns des zweiten Zeitraums umfasst.

3. Verfahren nach Anspruch 2, wobei das Verfahren ferner den Schritt des Anzeigens des zweiten Zeitraums in einer Liste umfasst.

4. Verfahren nach Anspruch 3, wobei das Verfahren ferner den Schritt des Umbenennens des zweiten Zeitraums umfasst.

5. Verfahren nach Anspruch 1, wobei nach Aktivierung des Bearbeitungsmodus eine Liste von bereits bestehenden Sprungfunktionen auf dem Bildschirm (101) erscheint, mit einer zusätzlichen Sprungfunktion an dem Ende der Liste benannt mit neuer Sprung.

6. Verfahren nach Anspruch 5, wobei die beiden Softkeys (501, 502) an der Unterseite des Bildschirms (101) unter der Liste der Sprungfunktionen erscheinen, wo als Reaktion auf die Aktivierung von einem der Softkeys (501) die Eingabemaske (504) auf dem Bildschirm (101) angezeigt wird und als Reaktion auf den anderen Softkey (502) der Kalender (602) auf dem Bildschirm (101) angezeigt wird.

7. Mobilkommunikationsvorrichtung (100), die mit einem Bildschirm (101) ausgerüstet ist, wobei die Mobilkommunikationsvorrichtung (100) mit anderen Kommunikationsvorrichtungen durch ein Drahtlostelekommunikationsnetz verbindbar ist, wobei die Mobilkommunikationsvorrichtung (100) ferner angeordnet ist, um ein Verfahren nach einem der Ansprüche 1 bis 6 auszuführen.

## Revendications

1. Procédé destiné à fournir des informations par traitement graphique constituant une interface homme-machine pour un dispositif de télécommunications mobiles (100) équipé d'un écran (101), le dispositif de télécommunications mobiles (100) pouvant être connecté à d'autres dispositifs de télécommunications par le biais d'un réseau de télécommunications sans fil, dans lequel le procédé comprend les étapes suivantes :
- recevoir une pluralité d'éléments de données ;
- générer un élément graphique (405, 406) pour chaque élément de données ;
- associer l'élément graphique (405, 406) à l'élément de données correspondant ;
- agencer les éléments de données conformément à leur temps de réception dans une liste ;
- afficher les premiers éléments graphiques (406) sur l'écran (101), lesquels sont associés à des éléments de données reçus durant une première période de temps, et
- afficher des seconds éléments graphiques (405) sur l'écran (101), lesquels sont associés à des éléments de données reçus durant une seconde période de temps, la première période de temps se situant plus dans le passé que la seconde période de temps, de telle sorte que les seconds éléments graphiques (405) sont montrés en avant-plan et que les premiers éléments graphiques (406) sont montrés en arrière-plan ;
- fournir une touche programmable de saut (105), permettant une fonction de saut, la fonction de saut permettant à l'utilisateur de sélectionner la seconde période de temps et de sauter sur la seconde période de temps sélectionnée,
dans lequel la fonction de saut appelle un menu rapide (402) fournissant des touches programmables (403) associées à des périodes fixes de temps et une touche programmable (408) liée à un mode d'édition, le mode d'édition permettant la génération d'une touche programmable associée à une nouvelle seconde période de temps, le mode d'édition fournissant un masque d'entrée ou un calendrier comme moyens d'entrée permettant à un utilisateur d'entrer la nouvelle seconde période de temps, et le mode d'édition permettant à l'utilisateur de sauter sur la nouvelle seconde période de temps.

2. Procédé selon la revendication 1, dans lequel le procédé comprend en outre l'étape pour stocker la seconde période de temps.

3. Procédé selon la revendication 2, dans lequel le procédé comprend en outre l'étape pour afficher la seconde période de temps dans une liste.

4. Procédé selon la revendication 3, dans lequel le procédé comprend en outre l'étape pour renommer la seconde période de temps.

5. Procédé selon la revendication 1, dans lequel après activation du mode d'édition, une liste de fonctions de saut déjà existantes apparaît sur l'écran (101), présentant une fonction de saut supplémentaire à la fin de la liste nommée nouveau saut.

6. Procédé selon la revendication 5, dans lequel deux touches programmables (501, 502) apparaissent au bas de l'écran (101), au-dessous de la liste des fonctions de saut, où en réaction à l'activation d'une des touches programmables (501), le masque d'entrée (504) est affiché sur l'écran (101), et en réaction à l'autre touche programmable (502), le calendrier (602) est affiché sur l'écran (101).

7. Dispositif de télécommunications mobiles (100) équipé d'un écran (101), le dispositif de télécommunications mobiles (100) pouvant être connecté à d'autres dispositifs de télécommunications par le biais d'un réseau de télécommunications sans fil, le dispositif de télécommunications mobiles (100) étant en outre agencé pour exécuter un procédé selon l'une quelconque des revendications 1 à 6.
